# EUROPEAN PATENT APPLICATION

(11) **EP 2 554 621 A1**
(43) Date of publication of application: **06.02.2013**
(21) Application number: 10848843.8
(22) Date of filing: 31.03.2010
(51) Int. Cl.: C09K 5/08, C23F 11/12

(54) **COOLING LIQUID COMPOSITION**

(71) Applicant: Shishiai-Kabushikigaisha, Seki-shi, Gifu 501-3923 (JP)
(72) Inventor: KAGA, Nobuyuki, Seki-shi Gifu 501-3923 (JP); ODA, Keisuke, Seki-shi Gifu 501-3923 (JP)
(74) Representative: Charrier, Rapp & Liebau
(86) International application number: PCT/JP2010/002360
(87) International publication number: WO 2011/121660

(57) **Abstract**

Disclosed is a cooling liquid composition, which has an excellent ability to prevent the corrosion of mainly a metal constituting a cooling system for an internal combustion engine or the like, particularly an iron-based metal, or alumninum or an aluminum alloy, and also can effectively inhibit cavitation damage. The composition contains a glycol as a base material, wherein the composition does not contain p-tert butyl benzoate or an alkali metal salt thereof, but contains (a) 0.05-0.5% by mass of silicic acid or an alkali metal salt thereof, (b) 0.1-8% by mass of sebacic acid or an alkali metal salt thereof, (c) 0.1-10% by mass of toluic acid or an alkali metal salt thereof, and (d) 0.001-0.5% by mass of at least one compound selected from a strontium compound, a magnesium compound, and a calcium compound.

## Description

### TECHNICAL FIELD

The present invention relates to a cooling liquid composition that has an excellent ability to prevent the corrosion of mainly a metal constituting a cooling system for an internal combustion engine such as an automotive engine, particularly an iron-based metal, or aluminum or an aluminum alloy, and also can effectively inhibit cavitation damage.

### BACKGROUND ART

Cooling systems of internal combustion engines such as an automotive engine have been conventionally constituted with metals such as cast iron, steel, brass, solder, copper, aluminum, and aluminum alloy. In a recent trend of reduction in weight of cars for resource and energy saving, such materials for parts constituting a cooling system for an engine have been reviewed in order to provide a lighter engine. Aluminum and aluminum alloy, which have a low specific density and a high recycling efficacy, now compose a major portion of metals constituting a cooling system for an internal combustion engine as well as cast iron and steel.

These metals constituting a cooling system for an internal combustion engine cause corrosion by contacting with water or air. Thus a metal corrosion inhibitor such as a phosphate, an amine salt, a borate, or a nitrite has been blended in a cooling liquid circulating in a cooling system to prevent the corrosion of a metal constituting the cooling system.

However, the phosphate, which has an excellent anticorrosion property for iron and aluminum, causes eutrophication of a river and increases BOD and COD of the river to promote the proliferation of algae, resulting in problematic generation of red tide and/or slime. In addition, the phosphate can react with a hard water component in a cooling liquid or the like to produce a precipitate. Through the reaction, the function of inhibiting corrosion declines, and accumulated precipitates cause a trouble of clogging of a circulation route and the like in a cooling system.

The amine salt has a drawback that it tends to react with a nitrite to generate carcinogenic nitrosoamine. The borate has properties causing corrosion of aluminum and aluminum alloys.

Under such a circumstance, there is a demand for a cooling liquid composition containing a metal corrosion inhibitor other than a phosphate, amine salt, borate, or nitrite, while having an excellent ability to prevent the corrosion of a metal constituting a cooling system for an internal combustion engine, particularly an iron-based metal, or aluminum or an aluminum alloy.

Considering the situation, the applicant (SHISHIAI-KABUSHIKIGAISHA) has extensively investigated and proposed a cooling liquid composition having an excellent ability to prevent the corrosion of an iron-based metal, or aluminum or an aluminum alloy (WO2007/116478). The cooling liquid composition is a glycol-based material containing 0.05 to 0.5% by mass of silicic acid or an alkali metal salt thereof, 0.5 to 5% by mass of p-tert butyl benzoate or an alkali metal salt thereof, 0.1 to 0.8% by mass of sebacic acid or an alkali metal salt thereof, 0.001 to 0.5% by mass of at least one compound selected from strontium, magnesium, and calcium compounds, and 0.05 to 1.0% by mass of a triazole derivative.

The cooling liquid composition ensures prevention of the corrosion of a metal constituting a cooling system for an internal combustion engine, particularly an iron-based metal, or aluminum or an aluminum alloy. Further, in the cooling liquid composition, there is no concern about adverse effects of a metal corrosion inhibitor such as a phosphate, amine salt, or nitrite, because the cooling liquid composition does not contain such a metal corrosion inhibitor.

As described above, according to the cooling liquid composition proposed by the applicant (SHISHIAI-KABUSHIKIGAISHA), the demand in the art can be completely satisfied. However, there is still another technological issue in the art as described below.

A cooling liquid composition charged in a cooling system for an internal combustion engine and water to dilute the cooling liquid composition dissolve a small amount of air. A cooling liquid prepared by diluting the cooling liquid composition in water thus can form air bubbles by a pressure difference during a circulation course in a cooling system for an internal combustion engine in which the liquid is charged. The air bubbles erode the surface of a metal constituting the cooling system, i.e. cavitation damage. The air bubbles causing cavitation damage are also generated through vibration.

Cavitation damages caused by air bubbles generated through a pressure difference or vibration have been conventionally addressed by adding a nitrite to a cooling liquid composition. The nitrite forms a coating on the surface of a metal, in particular iron, constituting the cooling system, and the coating is thought to prevent erosion by air bubbles.

However, as described above, the nitrite has a tendency to react with an amine salt to generate carcinogenic nitrosoamine, and thus has problems in use. Therefore, there is a need for an alternative method for effectively inhibiting cavitation damage.

Under such circumstances, the present inventors have extensively investigated for a cooling liquid composition that is free from harmful effects caused by a metal corrosion inhibitor such as a phosphate, amine salt, or nitrite, ensures prevention of the corrosion of a metal constituting a cooling system for an internal combustion engine, particularly an iron-based metal, or aluminum or an aluminum alloy, and can effectively inhibit cavitation damage, and have accomplished the present invention.

The present invention is to provide a cooling liquid composition that has an excellent ability to prevent the corrosion of a metal constituting a cooling system for an internal combustion engine, particularly an iron-based metal, or aluminum or an aluminum alloy and can effectively inhibit cavitation damage.

### SUMMARY OF THE INVENTION

To achieve the object, the present invention provides a cooling liquid composition containing a glycol as a base meterial, wherein the composition does not contain p-tert butyl benzoate or an alkali metal salt thereof in the base, and contains:
(a) 0.05 to 0.5% by mass of silicic acid or an alkali metal salt thereof,
(b) 0.1 to 8% by mass of sebacic acid or an alkali metal salt thereof,
(c) 0.1 to 10% by mass of toluic acid or an alkali metal salt thereof, and
(d) 0.001 to 0.5% by mass of at least one compound selected from the group consisting of strontium, magnesium, and calcium compounds.

The constitution as described above makes the cooling liquid composition of the present invention as having an excellent ability to prevent the corrosion of a metal constituting a cooling system, particularly an iron-based metal, or aluminum or an aluminum alloy, and effectively inhibiting cavitation damage. In addition, the absence of p-tert butyl benzoate and an alkali metal salt thereof in the base of the cooling liquid composition enables a significant reduction in an amount of defoaming agent added to the cooling liquid composition, compared with a cooling liquid composition containing p-tert butyl benzoate or an alkali metal salt thereof. Furthermore, the absence of a phosphate, borate, amine salt, or nitrite in the cooling liquid composition results in no formation of a precipitate with a hard water component in a cooling liquid and no generation of carcinogenic nitrosoamine.

Below, the cooling liquid composition of the present invention (hereinafter, simply referred to as the composition) will be described in detail. Examples of the glycol as the base constituting the composition of the present invention include ethyleneglycol, diethylene glycol, triethylene glycol, propylene glycol , 1,3-propanediol, 1,3-butanediol, 1,5-pentanediol, hexylene glycol, ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether. These glycols may be used alone or in combination as a mixture.

The composition of the present invention contains (a) silicic acid or an alkali metal salt thereof, (b) sebacic acid or an alkali metal salt thereof, (c) toluic acid or an alkali metal salt thereof, and (d) at least one compound selected from strontium, magnesium, and calcium compounds, in the base.

The component (a) is a compound selected from silicic acid and an alkaline metal salt thereof such as sodium and potassium silicates, and has an excellent ability to prevent the corrosion of a metal constituting a cooling system, particularly an iron-based metal, or aluminum or an aluminum alloy. A content of the component (a) in the base is 0.05 to 0.5% by mass. When the content is less than 0.05% by mass, the component (a) provides the prevention effect only to an insufficient level, and when more than 0.5% by mass, a level of the prevention effect is uneconomically lower than a level expected from the content increase.

The component (b) is a compound selected from sebacic acid and an alkaline metal salt thereof such as sodium and potassium sebacates, and has an excellent ability to prevent the corrosion of a metal constituting a cooling system, particularly an iron-based metal, or aluminum or an aluminum alloy in the cooling liquid. The component (b) also functions to dissolve a hard water component in the cooling liquid to control precipitation of the hard water component with other component in the liquid. In addition, the presence of both components (b) and (c) described below in the cooling liquid effectively inhibits a cavitation damage in a cooling system. A content of the component (b) in the base is 0.1 to 8% by mass. When the content is less than 0.1% by mass, the component (b) provides the prevention effect only to an insufficient level, and when more than 8% by mass, a level of the prevention effect is uneconomically lower than a level expected from the content increase.

The component (c) is a compound selected from toluic acid (4-methylbenzoic acid) and an alkaline metal salt thereof such as sodium and potassium toluates, and has an excellent ability to prevent the corrosion of a metal constituting a cooling system, particularly an iron-based metal, or aluminum or an aluminum alloy in the cooling liquid. In addition, the presence of both components (c) and (b) described above in the cooling liquid effectively inhibits cavitation damage in a cooling system. A content of the component (c) in the base is 0.1 to 10% by mass. When the content is less than 0.1% by mass, the component (c) provides the prevention effect only to an insufficient level, and when more than 10% by mass, a level of the prevention effect is uneconomically lower than a level expected from the content increase.

Next, the component (d) will be described. The component (d) has an excellent ability to prevent the corrosion of a metal constituting a cooling system, particularly an iron-based metal, or aluminum or an aluminum alloy in the cooling liquid, and is at least one compound selected from strontium, magnesium, and calcium compounds.

Specific examples of the strontium compound include strontium oxide, strontium hydroxide, strontium chloride, strontium fluoride, strontium iodide, strontium sulfate, strontium nitrate, strontium titanate, strontium borate, strontium tungstate, strontium formate, strontium acetate, strontium propionate, strontium butyrate, strontium valerate, strontium laurate, strontium stearate, strontium oleate, strontium glutamate, strontium lactate, strontium succinate, strontium malate, strontium tartarate, strontium maleate, strontium citrate, strontium oxalate, strontium malonate, strontium sebacate, strontium benzoate, strontium phthalate, strontium salicylate, and strontium mandelate. Preferred among these strontium compounds are strontium nitrate and strontium sulfate, because these have superior corrosion-prevention properties, and are easy to handle and easily available.

Specific examples of the magnesium compound include inorganic acid compounds such as magnesium oxide, magnesium chloride, magnesium hydroxide, magnesium carbonate, magnesium nitrate, magnesium sulfate, magnesium titanate, magnesium tungstate, magnesium chromate, magnesium permanganate, magnesium fluoride, and magnesium iodide; and organic acid compounds such as magnesium formate, magnesium acetate, magnesium propionate, magnesium butyrate, magnesium valerate, magnesium laurate, magnesium stearate, magnesium oleate, magnesium glutamate, magnesium lactate, magnesium succinate, magnesium malate, magnesium tartarate, magnesium hydrogen tartarate, magnesium maleate, magnesium citrate, magnesium oxalate, magnesium malonate, magnesium sebacate, magnesium benzoate, magnesium phthalate, magnesium salicylate, and magnesium mandelate.

Specific examples of the calcium compound include calcium formate, calcium acetate, calcium propionate, calcium butyrate, calcium valerate, calcium laurate, calcium stearate, calcium oleate, calcium glutamate, calcium lactate, calcium succinate, calcium malate, calcium tartarate, calcium maleate, calcium citrate, calcium oxalate, calcium malonate, calcium sebacate, calcium benzoate, calcium phthalate, calcium salicylate, calcium mandelate, calcium oxide, calcium hydroxide, calcium permanganate, calcium chromate, calcium fluoride, calcium iodide, calcium carbonate, calcium nitrate, calcium sulfate, calcium titanate, and calcium tungstate.

A content of the component (d) in the base is 0.001 to 0.5% by mass. When the content is less than 0.001% by mass, the component (d) provides the prevention effect only to an insufficient level, and when more than 0.5% by mass, a level of the prevention effect is uneconomically lower than a level expected from the content increase.

The composition of the present invention is also characterized by not containing p-tert butyl benzoate or an alkali metal salt thereof in the base. As thus, the composition of the present invention can be produced using a significantly reduced amount of defoaming agent, compared with a composition containing p-tert butyl benzoate or an alkali metal salt thereof. A cooling liquid composition containing p-tert butyl benzoate or an alkali metal salt thereof in a base forms a large amount of air bubbles. A cooling liquid (prepared by diluting the cooling liquid composition in water or the like) containing a large amount of air bubbles has disadvantages of difficulty in filling a cooling system therewith without a gap and a long time of filling. Incomplete filling of a cooling system with the cooling liquid may cause overheating. To avoid such a state, a defoaming agent has been conventionally added to cooling liquid compositions. When a cooling composition contains p-tert butyl benzoate or an alkali metal salt thereof, it can form a significantly large amount of air bubbles, and thus requires a large amount of defoaming agent to be added therein. The composition of the present invention does not contain p-tert butyl benzoate or an alkali metal salt thereof, and thus can significantly reduce an amount of defoaming agent to be added therein, resulting in a fast and secure operation of filling with the composition.

In one embodiment, the composition of the present invention can further contain a triazole derivative. A triazole derivative is a component having an excellent ability to prevent the corrosion of a copper-based metal constituting a cooling system such as brass and copper. Examples of triazole derivative include benzotriazole, tolyltriazole, 4-phenyl-1, 2, 3-triazole, 2-naphthotriazole, and 4-nitrobenzotriazole. Preferred among these compounds are benzotriazole and tolyltriazole.

A content of the triazole derivative is 0.05 to 1.0% by mass. When the content is less than this range, a copper-based metal is not sufficiently protected from corrosion, and when more than this range, a level of the prevention effect is uneconomically lower than a level expected from the content in excess of this range.

In another embodiment, the composition of the present invention can further contain at least one component selected from benzoates, nitrates, molybdates, and thiazoles, as well as the components described above. These optional components have an ability to prevent the corrosion of an iron-based metal, aluminum or an aluminum alloy, or a copper-based metal constituting a cooling system, and can be used together with the components (a) to (d) to enhance the effect of the composition to prevent the corrosion of a metal constituting a cooling system.

In another preferred embodiment, the composition of the present invention does not contain a phosphate, borate, amine salt, or nitrite in the base. In this aspect, the absence of the phosphate, borate, amine salt, or nitrite in the base results in no generation of a precipitate with a hard water component, no adverse effect on rust prevention of aluminum or an aluminum alloy, and no generation of carcinogenic nitrosoamine.

### BRIEF DESCRIPTION OF THE DRAWINGS

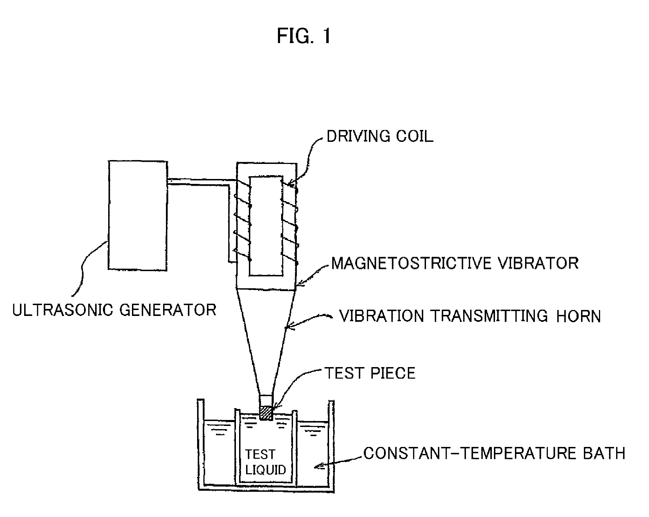

Fig. 1 shows a schematic view of an equipment used for a test of cavitation damage prevention performance.

### EXAMPLES

Examples will be described below in detail. These are illustrative only and do not limit the present invention. Table 1 shows a composition not containing p-tert butyl benzoate but containing sodium silicate, sebacic acid, and p-toluic acid, corresponding to a preferred example of the present invention (Working Example). Table 1 also shows Comparative Examples 1 and 2. Comparative Example 1 is a composition not containing p-tert butyl benzoate and sodium silicate but containing sebacic acid and p-toluic acid. Comparative Example 2 is a composition containing sodium silicate, sebacic acid and p-tert butyl benzoate.

**Table 1 Composition (% by mass)**

| Composition % | Working Example | Comparative Example 1 | Comparative Example 2 |
|---|---|---|---|
| Sodium silicate | 0.15 | - | 0.15 |
| Sebacic acid | 2.5 | 2.5 | 2.5 |
| p-toluic acid | 1.0 | 1.0 | - |
| p-tert butyl benzoate | - | - | 1.0 |
| Tolyltriazole | 0.2 | 0.2 | 0.2 |
| Strontium nitrate | 0.005 | 0.005 | 0.005 |
| Potassium hydroxide | (1) | (1) | (1) |
| Defoaming agent | 0.003 | 0.003 | 0.01 |
| Ethylene glycol | Rest part | Rest part | Rest part |

| | | | |
|---|---|---|---|
| (1): An amount required for adjusting pH of a 30% aqueous solution to 8.5. | | | |

Compositions of Working Example and Comparative Examples 1 and 2 shown in Table 1 were subjected to a metal corrosion test. Results are shown in Table 2. The metal corrosion test was conducted in accordance with the regulations of JIS K 2234 7.8. Metals used in the test were aluminum casting, cast iron, steel, brass, solder, and copper in a form of test piece.

**Table 2 Results of metal corrosion test**

| Item | | Working Example | Comparative Example 1 | Comparative Example 2 |
|---|---|---|---|---|
| Mass change Mg/cm2 | Aluminum casting | +0.02 | -0.05 | +0.01 |
| | Cast iron | -0.05 | -0.02 | -0.01 |
| | Steel | 0.00 | +0.01 | 0.00 |
| | Brass | -0.03 | -0.04 | -0.04 |
| | Solder | -0.05 | -0.06 | -0.03 |
| | Copper | -0.05 | -0.03 | -0.04 |
| Appearance of test piece | | No change | aluminum casting: blackened | No change |

These compositions in Table 1 were then subjected to a test of cavitation damage prevention performance by magnetostrictive vibration under test conditions shown in Table 3. Results are shown in Table 4. In the test, the apparatus shown in Fig. 1 was used.

**Table 3**

| Item | Condition |
|---|---|
| Frequency | 19 KHz |
| Amplitude | 30 µm |
| Material of test piece | FC 200 (cast iron) |
| Size of test piece | 16 mm circle |
| Concentration of sample | 20% in water prepared according to JIS |
| Amount of liquid | 50 ml |
| Temperature of liquid | 50°C |
| Immersion depth | 4 mm |

**Table 4 Result of magnetostrictive cavitation test**

| Item | Working Example | Comparative Example 1 | Comparative Example 2 |
|---|---|---|---|
| Mass change mg | 39.2 | 41.0 | 75.1 |

From Tables 2 and 4, it was found that the composition of Comparative Example 1 not containing sodium silicate and p-tert butyl benzoate but containing sebacic acid and p-toluic acid had an effect of inhibiting cavitation damage but exhibited insufficient performance of preventing the corrosion of an iron-based metal, or aluminum or an aluminum alloy, while the composition of Comparative Example 2 containing sodium silicate, sebacic acid and p-tert butyl benzoate exhibited an excellent ability to prevent the corrosion of an iron-based metal, or aluminum or an aluminum alloy but had insufficient effect of inhibiting cavitation damage.

In contrast, the composition of Working Example not containing p-tert butyl benzoate but containing sodium silicate, sebacic acid, and p-toluic acid was found to have an excellent ability to prevent the corrosion of an iron-based metal, or aluminum or an aluminum alloy and also have an effect of inhibiting cavitation damage. It was further confirmed that the composition of Working Example could be prepared with such a significantly decreased amount of defoaming agent as 0.003% by mass, compared with 0.01% by mass in the composition of Comparative Example 2 containing p-tert butyl benzoate, because the composition of Working Example did not contain p-tert butyl benzoate.

## Claims

1. A cooling liquid composition comprising a glycol as a base material, wherein the composition does not contain p-tert butyl benzoate or an alkali metal salt thereof, and comprises:
(a) 0.05 to 0.5% by mass of silicic acid or an alkali metal salt thereof,
(b) 0.1 to 8% by mass of sebacic acid or an alkali metal salt thereof,
(c) 0.1 to 10% by mass of toluic acid or an alkali metal salt thereof, and
(d) 0.001 to 0.5% by mass of at least one compound selected from the group consisting of strontium, magnesium, and calcium compounds.

2. The cooling liquid composition according to claim 1, further comprising 0.05 to 1.0% by mass of a triazole derivative.

3. The cooling liquid composition according to claim 1 or 2, wherein the composition does not contain a phosphate, borate, amine salt, or nitrite.
